(19) Europäisches Patentamt
European Patent Office
Office européen des brevets

(11) **EP 3 508 762 A1**

(12) **EUROPEAN PATENT APPLICATION**
published in accordance with Art. 153(4) EPC

(43) Date of publication:
**10.07.2019 Bulletin 2019/28**

(51) Int Cl.:
*F16J 15/3204* (2016.01)        *F16C 11/06* (2006.01)
*F16J 15/3252* (2016.01)        *F16J 15/34* (2006.01)

(21) Application number: **18848886.0**

(22) Date of filing: **19.07.2018**

(86) International application number:
**PCT/JP2018/027190**

(87) International publication number:
**WO 2019/039152 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2017   JP 2017161672**

(71) Applicants:
• **National University Corporation Saitama University**
  **Saitama City, Saitama 338-8570 (JP)**
• **National University Corporation Yokohama National University**
  **Yokohama-shi, Kanagawa 240-8501 (JP)**
• **NOK Corporation**
  **Tokyo 105-8585 (JP)**

(72) Inventors:
• **Honda Shigenobu**
  **Fujisawa-shi**
  **Kanagawa 251-0042 (JP)**
• **Endo Tetsuya**
  **Fujisawa-shi**
  **Kanagawa 251-0042 (JP)**
• **TADOKORO Chiharu**
  **Saitama-shi**
  **Saitama 338-8570 (JP)**
• **NAGAMINE Takuo**
  **Saitama-shi**
  **Saitama 338-8570 (JP)**
• **NAKANO Ken**
  **Yokohama-shi**
  **Kanagawa 240-8501 (JP)**

(74) Representative: **Tetzner, Michael et al**
**TETZNER & PARTNER mbB**
**Patent- und Rechtsanwälte**
**Van-Gogh-Strasse 3**
**81479 München (DE)**

(54) **SEALING DEVICE**

(57)    A countermeasure to seal squealing is performed at a low price using an extremely simple configuration without greatly modifying constituent elements of a seal which costs a great amount of time and money. An annular shape of grease lip portions 31b is not symmetrical to a rotational center of a fixing member 31A. Therefore, a relative rotational center B of contacting target portions 31b1 of the grease lip portions 31b is eccentric by a distance ε with respect to a rotational center A of a rotating shaft 11A. When a slinger 21A rotates, a friction force F is generated between the contacting target portions 31b1 of the grease lip portions 31b and a flange surface 21b1. In a housing 41A which supports the fixing member 31A, torsion is generated by the friction force F and a restoring force which is centered on the relative rotational center B acts on the contacting target portions 31b1 against the torsion. The contacting target portions 31b1 receive a rotational drive force from the flange surface 21b1 in a direction which intersects a restoring direction of the restoring force in a predetermined angle range and a rotational drive component which orthogonally intersects the restoring direction of the restoring force is applied to the contacting target portions 31b1 from the flange surface 21b1.

EP 3 508 762 A1

Fig. 1

**Description**

Technical Field

The present invention relates to a sealing device which suppresses leakage of a sealing target or the entrance of foreign matter via a shaft circumference of a rotating shaft due to a contacting target portion of a lip portion or the like being pushed against a rotating surface to contact and slide on the rotating surface.

Background Art

An oil seal which is disclosed in Patent Literature 1 or the like is an example of this type of sealing device in the related art. The oil seal is a functional component which is used in many devices with the object of keeping a sealing fluid inside an apparatus and suppressing the entrance of foreign matter originating from outside of the apparatus into the apparatus. As indicated in Patent Literature 1, there is an oil seal having a structure that achieves sealing by pushing a contacting target portion of a non-rotating lip portion or the like, which is fixed to a housing and is static, against a rotating surface which is fixed to a rotating shaft and rotates together with the rotating shaft, so as to cause the contacting target portion to contact the rotating surface.

Citation List

Patent Literature

[PTL 1] JP-A-2012-57729

Summary of Invention

Technical Problem

However, in the sealing device of the related art having the structure which is described above, frictional resistance is generated in sliding surfaces of the rotating surface and the contacting target portion which push against each other due to relative rotation between the two. There is a case in which a friction coefficient of the frictional resistance is reduced as the rotation frequency of the rotating shaft increases, stick-slipping occurs between the rotating surface and the contacting target portion in a region in which the frictional resistance is reduced, and as a result, seal squealing is generated. In order to suppress the squealing reduction, it is necessary to eliminate the stick-slipping.

In order to eliminate the stick-slipping, there are measures which reduce the surface pressure by reducing a pushing load which pushes the contacting target portion against the rotating surface, reducing the lip rigidity of the contacting target portion, and the like. There are also measures which achieve an optimization of the sliding surface roughness, an optimization of the coating and rubber properties of a sliding member, and the like to modify the sliding member. However, modifying the pushing load or the constituent elements of the seal such as the members which are used often leads to a notable loss of balance with the other functions of the seal such as friction properties, product lifespan, and lubricant properties. Great time and cost are expended in order to assess this balance in the actual field of seal squealing countermeasures.

Solution to Problem

The present invention is provided in order to solve the problem and is a sealing device including a rotating shaft which rotates centered on an axial center, a rotating member which includes a rotating surface, which projects in a direction which orthogonally intersects the axial center and surrounds an outer circumference of the rotating shaft, and rotates together with the rotating shaft, and a fixing member which includes a contacting target portion which is provided in a non-rotating state to surround an outer circumference of the rotating shaft and face the rotating surface, receives a biasing force in an axial direction of the rotating shaft to contact the rotating surface, slides on the rotating surface due to the rotating shaft rotating, and rotates relative to the rotating shaft, in which the sealing device suppresses leakage of a sealing target or entrance of foreign matter via a shaft circumference of the rotating shaft due to the contacting target portion being pushed against the rotating surface and contacting and sliding on the rotating surface, and in which in the fixing member, a relative rotational center of the contacting target portion is disposed to be eccentric with respect to a rotational center of the rotating shaft, the contacting target portion receives a rotational drive force from the rotating shaft in a direction which intersects, in a predetermined angle range, a restoring direction of a restoring force which is exhibited around the relative rotational center against torsion which is generated by a friction force which is generated between the contacting target portion and the rotating surface, and a rotational drive component which orthogonally intersects the restoring direction of the restoring force is applied to the contacting target portion from the rotating surface.

According to the present configuration, due to the side-slipping drive component of a direction which orthogonally intersects the restoring direction of the restoring force being applied to the contacting target portion of the fixing member from the rotating surface of the rotating member, the restoring force and the restoring direction component of the friction force which acts on the contacting target portion are autonomously stabilized to assume an equalized state, friction vibration is no longer generated by the friction which is generated between the rotating surface and the contacting target portion, and the stick-slipping is eliminated. Therefore, merely by appropriately setting the relative positional relationship between the rotating surface of the rotating member and the contacting target portion of the fixing member without greatly modifying the constituent elements of the seal which costs a great amount of time and money, it is possible to perform seal squealing countermeasures at low cost using an extremely simple configuration. Therefore, even in a case in which the friction properties which arise in the sealed surface have a negative incline in relation to the sliding velocity and the frictional resistance decreases as the rotation frequency of the rotating shaft increases, it is possible to suppress the generation of unusual sounds which originate in the stick-slipping. In a case in which the lubricant such as a grease or an oil which is initially sealed into the sealing device is depleted when the sealing device is used in an actual marketplace, it is possible to suppress the generation of unusual sounds which originate in the stick-slipping.

In the present invention, the rotating member is a slinger which includes a flange surface as the rotating surface and is fixed to the rotating shaft, the fixing member includes a lip portion, a distal end portion of which contacts and slides on the flange surface as the contacting target portion, which exhibits, as the biasing force, an elastic force for pushing the distal end portion against the flange surface, and a metal ring which supports the lip portion, and the sealing device is configured from an oil seal which suppresses leakage of a sealing target or entrance of foreign matter via a shaft circumference of the rotating shaft due to the distal end portion of the lip portion being pushed against the flange surface to contact and slide on the flange surface.

According to the present configuration, a rotational drive component which orthogonally intersects the restoring direction of the restoring force is applied to the lip portion from the flange surface of the slinger due to the relative rotational center of the lip portion being disposed to be eccentric in relation to the rotational center of the slinger and the lip portion receiving a rotational drive force from the slinger in a direction which intersects a restoring direction of the restoring force in a predetermined angle range. Therefore, the restoring force and the restoring direction component of the friction force which acts on the lip portion are autonomously stabilized to assume an equalized state, friction vibration is no longer generated by the friction which is generated between the flange surface of the slinger and the lip portion, and the stick-slipping is eliminated from the oil seal.

In the present invention, the rotating shaft includes a sealing portion which is axially sealed, the rotating member is a slinger which includes a flange surface as the rotating surface and is fixed to the rotating shaft in a vicinity of the sealing portion, the fixing member includes a lip portion which has a skirt-shape in which a diameter spreads from the sealing portion toward the flange surface, a distal end portion of the lip portion contacts and slides on the flange surface as the contacting target portion, and exhibits, as the biasing force, an elastic force for pushing the distal end portion against the flange surface, and the sealing device suppresses, together with the sealing portion, leakage of a sealing target or entrance of foreign matter via a shaft circumference of the rotating shaft due to the distal end portion of the lip portion being pushed against the flange surface to contact and slide on the flange surface.

According to the present configuration, a rotational drive component which orthogonally intersects the restoring direction of the restoring force is applied to the lip portion from the flange surface of the slinger due to the relative rotational center of the lip portion which has a skirt shape being disposed to be eccentric in relation to the rotational center of the slinger and the lip portion receiving a rotational drive force from the slinger in a direction which intersects a restoring direction of the restoring force in a predetermined angle range. Therefore, the restoring force and the restoring direction component of the friction force which acts on the lip portion are autonomously stabilized to assume an equalized state, friction vibration is no longer generated by the friction which is generated between the flange surface of the slinger and the lip portion, and the stick-slipping which occurs in the skirt-shaped lip portion is eliminated.

In the present invention, the rotating member includes a rotating ring which includes a rotating ring-shaped end surface which orthogonally intersects an axial center of the rotating shaft as the rotating surface, is fixed to the rotating shaft, and is rigid, the fixing member includes a static annular surface which faces the rotating ring-shaped end surface as the contacting target portion, includes a fixed ring in which the static annular surface contacts and slides on the rotating ring-shaped end surface, and is rigid, the sealing device further includes an elastic body which exhibits, as the biasing force, an elastic force for pushing the static annular surface of the fixed ring against the rotating ring-shaped end surface of the rotating ring, and the sealing device is configured from a mechanical seal which suppresses leakage of a sealing target or entrance of foreign matter via a shaft circumference of the rotating shaft due to the static annular surface of the fixed ring being pushed against the rotating ring-shaped end surface of the rotating ring to contact and slide on the rotating ring-shaped end surface.

According to the present configuration, a rotational drive component which orthogonally intersects the restoring direction of the restoring force is applied to the static annular surface of the fixed ring from the rotating ring-shaped end surface of the rotating ring due to the relative rotational center of the static annular surface in the fixed ring being disposed to be eccentric in relation to the rotational center of the rotating ring and the static annular surface receiving a rotational drive force from the rotating ring in a direction which intersects a restoring direction of the restoring force in a predetermined angle range. Therefore, the restoring force and the restoring direction component of the friction force which acts on the static annular surface of the fixed ring are autonomously stabilized to assume an equalized state, friction vibration is no longer generated by the friction which is generated between the rotating ring-shaped end surface of the rotating ring and the static annular surface of the fixed ring, and the stick-slipping is eliminated from the mechanical seal.

In the present invention, the sealing device further includes a dust cover which includes a trunk portion which has deformable elasticity, a fixing target portion which is provided to one end side of the trunk portion and is fixed to a socket which supports a ball stud to rotate and rock freely, and a seal portion which is provided on another end side of the trunk portion to slide freely with respect to each of a shaft portion of the ball stud having a spherical portion on one end and an attaching target portion of the ball stud, in which the rotating shaft is the ball stud, in which the rotating member is the attaching target portion which includes an attaching target surface as the rotating surface and is fixed to a shaft portion of the ball stud, in which the fixing member is an elastic seal main body which is provided with a dust lip which contacts the attaching target surface as the contacting target portion and is provided on the seal portion, and in which the sealing device suppresses leakage of a sealing target from a ball joint portion or entrance of foreign matter to the ball joint portion via a shaft circumference of the ball stud due to the dust lip receiving an elastic force which is exhibited by the trunk portion as the biasing force, being pushed against the attaching target surface to contact the attaching target surface, and the dust lip sliding on the attaching target surface when the ball stud rotates.

According to the present configuration, a rotational drive component which orthogonally intersects the restoring direction of the restoring force is applied to the dust lip from the attaching target surface of the attaching target portion due to the relative rotational center of the dust lip being disposed to be eccentric in relation to the rotational center of the attaching target portion and the dust lip receiving a rotational drive force from the attaching target portion in a direction which intersects a restoring direction of the restoring force in a predetermined angle range. Therefore, the restoring force and the restoring direction component of the friction force which acts on the dust lip are autonomously stabilized to assume an equalized state, friction vibration is no longer generated by the friction which is generated between the attaching target surface of the attaching target portion and the dust lip, and the stick-slipping which occurs in the seal portion of the dust cover is eliminated.

In the present invention, the predetermined angle range is a range indicated by an inequality expression $0 < |\phi| \leq 90°$ when an absolute value of an angle $\phi$ which is formed by a rotational drive direction of the rotating shaft with a restoring direction of the restoring force is set to $|\phi|$.

According to the present configuration, the rotational drive component which orthogonally intersects the restoring direction of the restoring force becomes non-zero and is applied to the contacting target portion of the fixing member from the rotating surface of the rotating member, and the attenuation manifests in the friction vibration originating in the side-slipping drive component. Therefore, the friction vibration which is generated by the friction which is generated between the rotating surface of the rotating member and the contacting target portion of the fixing member is suppressed and the stick-slipping is eliminated.

Advantageous Effects of Invention

According to the present invention, merely by appropriately setting the relative positional relationship between the rotating surface of the rotating member and the contacting target portion of the fixing member without greatly modifying the constituent elements of the seal which costs a great amount of time and money, it is possible to perform seal squealing countermeasures at low cost using an extremely simple configuration.

Brief Description of Drawings

Fig. 1 is a sectional diagram of a sealing device according to a first embodiment of the present invention.
Fig. 2 is a sectional diagram distinctly illustrating each of a slinger and a fixing member which configure the sealing device according to the first embodiment depicted in Fig. 1.
Fig. 3 is a diagram representing the relationship between a rotation drive velocity V which is received by a random point P of a contacting target portion, a restoring velocity v of a restoring force which acts on the contacting target portion, and a friction force F which is generated on the contacting target portion in the sealing device according to the first embodiment of the present invention.
Figs. 4A and 4B are a plan view and a side view for explaining a principle of the sealing device of the present invention.

Fig. 5 is a sectional diagram of a sealing device according to a second embodiment of the present invention.

Fig. 6 is a sectional diagram distinctly illustrating each of a slinger and a fixing member which configure the sealing device according to the second embodiment depicted in Fig. 5.

Fig. 7A is a sectional diagram of a sealing device according to a third embodiment of the present invention and Fig. 7B is a sectional diagram distinctly illustrating each of a rotating member and a fixing member which configure the sealing device according to the third embodiment depicted in Fig. 7A.

Fig. 8A is a sectional diagram of a sealing device according to a modification example of the third embodiment of the present invention and Fig. 8B is a sectional diagram distinctly illustrating each of a rotating member and a fixing member which configure the sealing device according to the modification of the third embodiment depicted in Fig. 8A.

Fig. 9A is a sectional diagram of the main parts of a sealing device according to a fourth embodiment of the present invention and Fig. 9B is a sectional diagram of a dust cover which configures the sealing device according to the fourth embodiment depicted in Fig. 9A.

Fig. 10 is a sectional diagram illustrating a complete image of the sealing device according to the fourth embodiment, the main parts of which are illustrated in Fig. 9A.

Description of Embodiments

Next, a description will be given of embodiments of a sealing device according to the present invention.

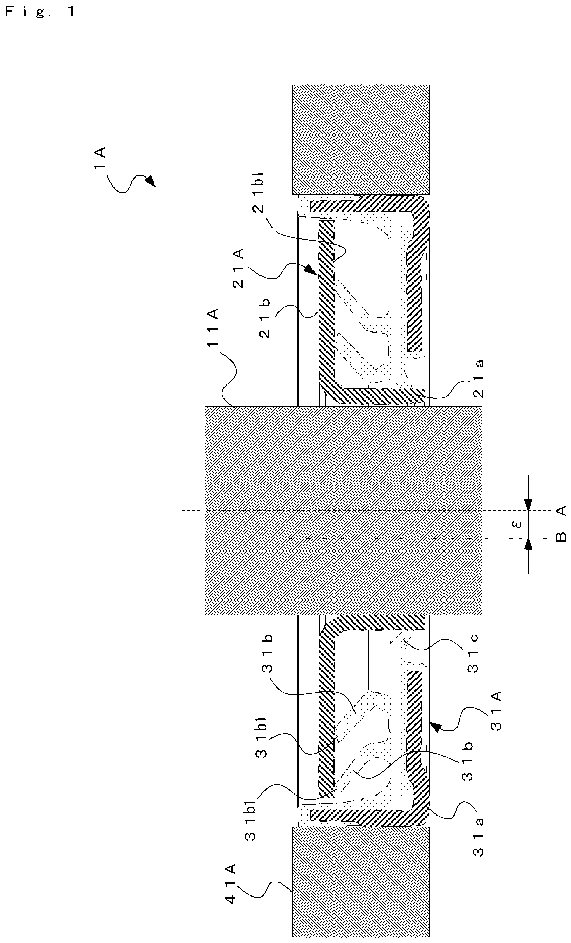

Fig. 1 is a sectional diagram of a sealing device 1A according to the first embodiment of the present invention. The sealing device 1A is configured to include a rotating shaft 11A which rotates centered on an axial center A, a slinger 21A which is a rotating member which is fixed to the rotating shaft 11A and rotates together with the rotating shaft 11A, and a fixing member 31A which rotates relative to the rotating shaft 11A. An outer circumference of the fixing member 31A is fitted into a housing 41A to fix the fixing member 31A to the housing 41A.

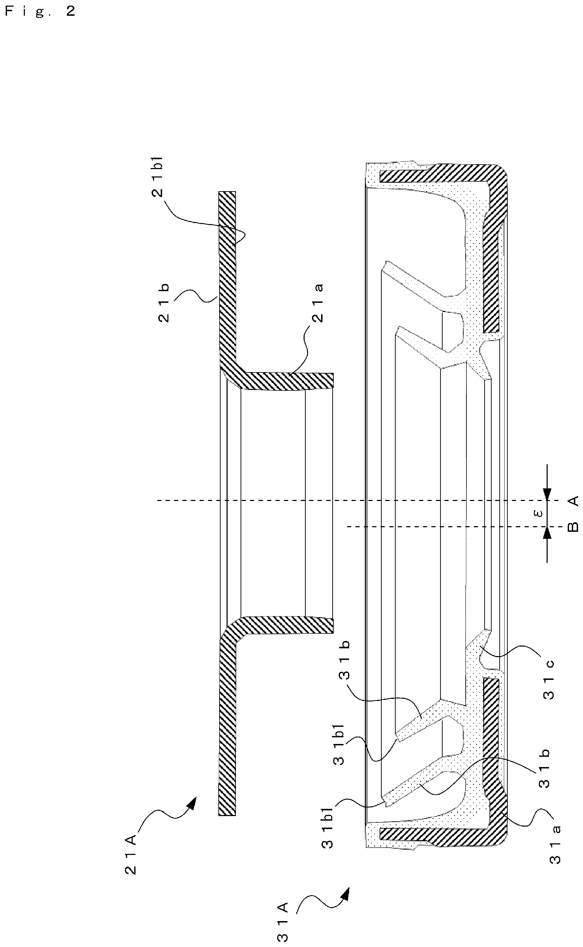

Fig. 2 is a sectional diagram distinctly illustrating each of the slinger 21A and the fixing member 31A in which the sealing device 1A illustrated in Fig. 1 is removed from the housing 41A and the rotating shaft 11A is taken out.

The slinger 21A is produced by punching and press-forming a metal plate and includes a cylinder portion 21a which is pressure fitted to the outer circumferential surface of the rotating shaft 11A and a flange portion 21b which extends in a disc shape in an outward radial direction from the cylinder portion 21a. The flange portion 21b includes, as a rotating surface, a flange surface 21b1 which projects in a direction orthogonally intersecting the axial center A of the rotating shaft 11A to surround the outer circumference of the rotating shaft 11A.

The fixing member 31A is obtained by integrally molding a rubber elastic material as a lip portion on a metal ring 31a which is produced by punching and press-forming a metal plate. Two grease lip portions 31b, the distal end portions of which contact the flange surface 21b1, and a dust lip portion 31c, the distal end portion of which contacts the outer circumference of the cylinder portion 21a, are formed in the lip portion. The lip portion is supported by the metal ring 31a. The grease lip portions 31b exhibit an elastic force for pushing the distal end portions of the grease lip portions 31b against the flange surface 21b1, and the distal end portions receive a biasing force in an axial direction of the rotating shaft 11A to flex as illustrated in Fig. 1.

In the fixing member 31A, the distal end portions of the grease lip portions 31b receive the biasing force in the axial direction of the rotating shaft 11A and contact the flange surface 21b1 as contacting target portions 31b1. The contacting target portions 31b1 surround the outer circumference of the rotating shaft 11A to face the flange surface 21b1 and are provided in a non-rotating state due to the fixing member 31A being supported by the housing 41A. The contacting target portions 31b1 slide on the flange surface 21b1 due to the rotating shaft 11A rotating and the contacting target portions 31b1 rotate relative to the flange surface 21b1. The sealing device 1A suppresses the leakage of a sealing target or the entrance of foreign matter via the shaft circumference of the rotating shaft 11A due to the distal end portions of the grease lip portions 31b being pushed against the flange surface 21b1 to contact and slide on the flange surface 21b1. The sealing device 1A is used as a hub bearing seal or an oil seal, for example.

In the present embodiment, although the relative rotational center of the fixing member 31A matches the rotational center A of the rotating shaft 11A, the annular shape of the grease lip portions 31b is not symmetrical to the relative rotational center of the fixing member 31A and is formed asymmetrically. Therefore, a relative rotational center B of the contacting target portions 31b1 of the grease lip portions 31b is disposed to be eccentric by an interval of a distance $\varepsilon$ with respect to the rotational center A of the rotating shaft 11A. When the rotating shaft 11A rotates and the slinger 21A rotates together with the rotating shaft 11A, the friction force F is generated between the contacting target portions 31b1 of the grease lip portions 31b and the flange surface 21b1. In the housing 41A which supports the fixing member 31A, torsion is generated by the friction force F and a restoring force which is centered on the relative rotational center B acts on the contacting target portions 31b1 against the torsion. The contacting target portions 31b1 receive a rotational drive force from the flange surface 21b1 of the slinger 21A in a direction which intersects the restoring direction of the restoring force in a predetermined angle range and a rotational drive component which orthogonally intersects the restoring direction of the restoring force is applied to the contacting target portions 31b1 from the flange surface 21b1.

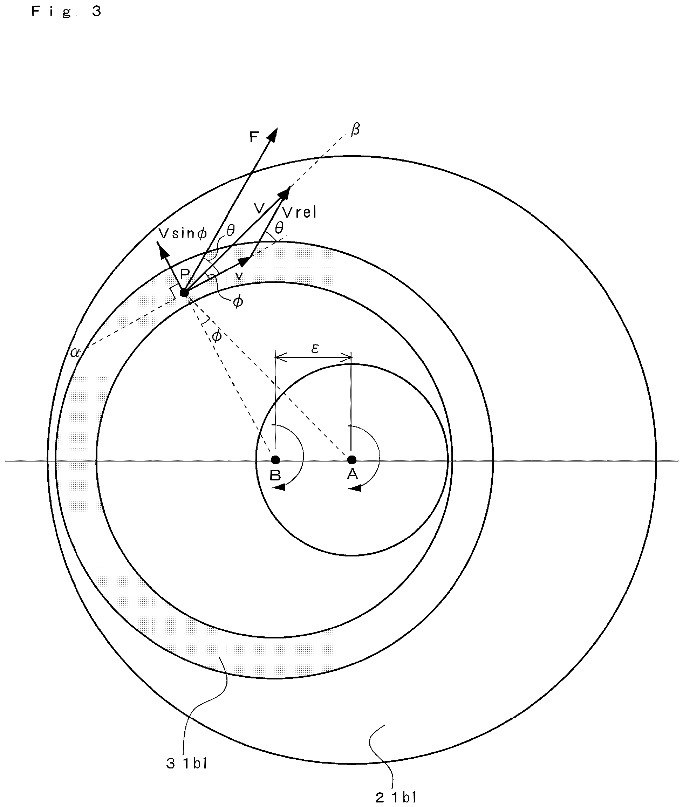

In other words, as illustrated in Fig. 3, when the contacting target portions 31b1 which slides on the flange surface 21b1 centered on the relative rotational center B is depicted by a circle with a dot and the flange surface 21b1 which rotates centered on the rotational center A is depicted by a white circle, the friction force F between the contacting target portions 31b1 and the flange surface 21b1 acts on a random point P on the contacting target portions 31b1 of the grease lip portions 31b. A rotational drive force of a rotation drive velocity V from the flange surface 21b1 acts in a rotational drive direction $\beta$. The restoring force of the restoring velocity v acts in a restoring direction $\alpha$. At this time, since the relative rotational center B of the contacting target portions 31b1 is eccentric from the rotational center A of the flange surface 21b1 by the distance $\varepsilon$, the rotational drive direction $\beta$ of the rotational drive force which the contacting target portions 31b1 receive from the flange surface 21b1 intersects the restoring direction $\alpha$ of the restoring force at a predetermined angle $\phi$, and a rotational drive component $V\sin\phi$ which orthogonally intersects the restoring direction $\alpha$ of the restoring force is applied to the contacting target portions 31b1.

In the present embodiment, the absolute value $|\phi|$ of the angle $\phi$ (the misalignment angle) which is formed by the rotational drive direction $\beta$ with the restoring direction $\alpha$ of the restoring force is set in a predetermined angle range indicated by inequality expression $0 < |\phi| \leq 90°$ and the drive component $V\sin\phi$ is set to a nonzero value. According to this setting, the rotational drive component $V\sin\phi$ which causes side-slipping in relation to the restoring direction $\alpha$ of the restoring force is secured.

According to the sealing device 1A of the present embodiment, due to the rotational drive component $V\sin\phi$ which orthogonally intersects the restoring direction $\alpha$ of the restoring force being applied to the contacting target portions 31b1 of the grease lip portions 31b from the flange surface 21b1 of the slinger 21A, a restoring direction component $F\cos\theta$ of the friction force F which acts on the contacting target portions 31b1 of the grease lip portions 31b and the restoring force which is exhibited by the housing 41A are autonomously stabilized to assume an equalized state, and friction vibration is no longer generated by the friction which is generated between the flange surface 21b1 of the slinger 21A and the contacting target portions 31b1 of the grease lip portions 31b.

Here, $\theta$ is an angle formed by a relative velocity Vrel with respect to the restoring direction $\alpha$ of the restoring force, the relative velocity Vrel being between the rotation drive velocity V of the flange surface 21b1 and the restoring velocity v of the restoring force which is applied to the contacting target portions 31b1 of the grease lip portions 31b from the housing 41A. The restoring velocity v of the restoring force is represented by a first-order differentiation x' of a displacement amount x by which the contacting target portions 31b1 are displaced in a circumferential direction corresponding to the torsion. Since the friction force F which acts on the contacting target portions 31b1 of the grease lip portions 31b acts in a direction which reduces the relative velocity Vrel, the angle which the friction force F forms with respect to the restoring direction $\alpha$ of the restoring force is also $\theta$.

In other words, due to the relative rotational center B of the toric contacting target portions 31b1 being disposed to be eccentric with respect to the rotational center A of the flange surface 21b1 of the slinger 21A and the rotational drive direction $\beta$ of the flange surface 21b1 intersecting the restoring direction $\alpha$ of the restoring force in a predetermined angle range, the rotational drive component $V\sin\phi$ which orthogonally intersects the restoring direction $\alpha$ of the restoring force is applied to the toric contacting target portions 31b1 from the flange surface 21b1. In the present embodiment, since the misalignment angle $\phi$ which is formed between the rotational drive direction $\beta$ and the restoring direction $\alpha$ is set in a range of $0 < |\phi| \leq 90°$, the rotational drive component $V\sin\phi$ which orthogonally intersects the restoring direction $\alpha$ of the restoring force becomes non-zero and is applied to the contacting target portions 31b1, and attenuation which originates in the rotational drive component $V\sin\phi$ which causes the side-slipping manifests in the friction vibration. Therefore, the restoring direction component $F\cos\theta$ of the friction force F which acts on the contacting target portions 31b1 of the grease lip portions 31b and the restoring force which is exhibited by the housing 41A are autonomously stabilized to assume an equalized state, and the friction vibration is no longer generated by the friction which is generated between the flange surface 21b1 of the slinger 21A and the contacting target portions 31b1 of the grease lip portions 31b.

Accordingly, the stick-slipping which occurs between the flange surface 21b1 and the contacting target portions 31b1 is eliminated from the oil seal. Therefore, merely by appropriately setting the relative positional relationship between the flange surface 21b1 of the slinger 21A and the contacting target portions 31b1 of the grease lip portions 31b without greatly modifying the constituent elements of the seal which costs a great amount of time and money, it is possible to perform seal squealing countermeasures at low cost using an extremely simple configuration. Therefore, even in a case in which the friction properties which arise in the flange surface 21b1 have a negative incline in relation to the sliding velocity and the frictional resistance decreases as the rotation frequency of the rotating shaft 11A increases, it is possible to suppress the generation of unusual sounds which originate in the stick-slipping. In a case in which the lubricant such as a grease or an oil which is initially sealed into the sealing device 1A is depleted when the sealing device 1A is used in an actual marketplace, it is possible to suppress the generation of unusual sounds which originate in the stick-slipping.

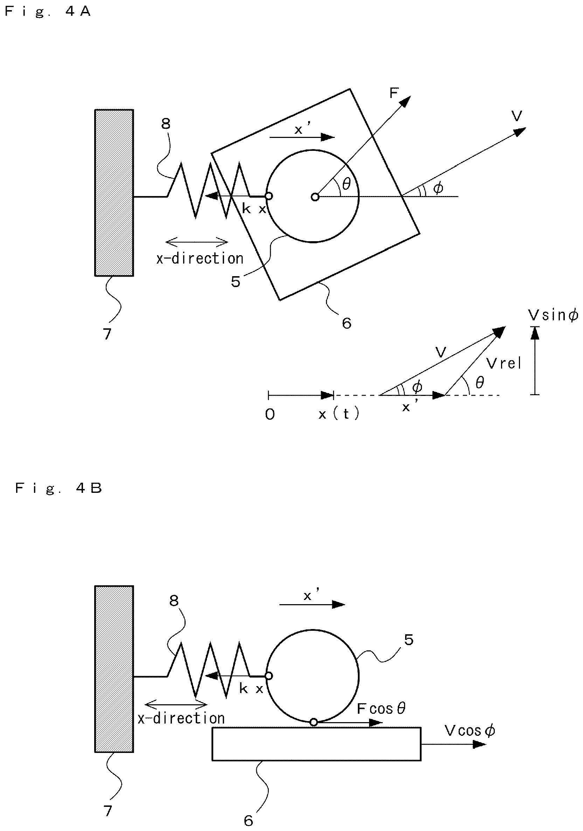

Figs. 4A and 4B are a plan view and a side view for explaining the sealing principle of the sealing device 1A of the present embodiment. Figs. 4A and 4B schematically represent the slipping friction between a sphere 5 and a plate 6. It is possible to apply the principle described hereinafter to the sealing principle of the sealing device 1A of the present embodiment by adapting the sphere 5 to the grease lip portions 31b of the present embodiment and adapting the plate 6 to the flange surface 21b1.

The sphere 5 having a mass m is attached to a right end of a spring 8 having a rigidity k which is fixed to a static wall 7 by a left end of the spring 8. The motion of the sphere 5 is only allowed as translation in a bending direction (an x-direction) of the spring 8. The plate 6 contacts the sphere 5 with a perpendicular load W and moves linearly at the drive velocity V to form a misalignment angle $\phi$ with the x-direction. Using the position of the sphere 5 when the spring 8 is at the natural length of the spring 8 as an origin 0, when the position of the sphere 5 at a time t is set to x(t), the motion velocity of the sphere 5 may be represented as x' using a differentiation (') which is related to t. When the relative velocity Vrel between the drive velocity V of the plate 6 and the motion velocity x' of the sphere 5 is set to θ, since the friction force F which acts on the sphere 5 acts in a direction which reduces the relative velocity Vrel, the angle which the friction force F forms with the x-direction also becomes θ. When the misalignment angle $\phi \neq 0$, the relative velocity Vrel has a non-zero lateral sliding component Vsin $\phi$ and the orientation of the friction force F changes according to the change in the motion velocity x'.

When the magnitude of the friction force which acts on the sphere 5 is represented by the function F = F(Vrel) of the relative velocity Vrel, the motion equation of the sphere 5 is given by the following Equation (1).

$$\mathrm{mx'' + kx = F(Vrel) \cdot cos\theta \cdots (1)}$$

Here, the relative velocity Vrel and the angle θ are geometrically defined by Equations (2) and (3).

$$\mathrm{Vrel = (V^2 - 2vx' \cdot cos\phi + x'^2)^{1/2} \cdots (2)}$$

$$\mathrm{cos\theta = (Vcos\phi - x') / Vrel \cdots (3)}$$

When the misalignment angle $\phi \neq 0$, since the friction force which acts on the sphere 5 is limited to the dynamic friction force, F(Vrel) is given by the following Equation (4) using the dynamic friction coefficient μ(Vrel).

$$\mathrm{F(Vrel) = \mu(Vrel) \cdot W \cdots (4)}$$

When the x component Fcosθ of the friction force F which acts on the sphere 5 and the restoring force kx of the spring 8 are balanced, an equilibrium point $x_{eq}$ is given by the following Equation (5) from the function Vrel = V, θ = $\phi$ which may be obtained in consideration of x' = 0.

$$\mathrm{x_{eq} = F(V) \cdot cos\phi / k \cdots (5)}$$

A disturbance x~ from the equilibrium point $x_{eq}$ is provided using the following Equation (6) in order to consider the stability of the equilibrium point $x_{eq}$.

$$\mathrm{x = x_{eq} + x\sim \cdots (6)}$$

When Equation (6) is substituted into Equations (1) to (3) and (x~)' / V is treated as a minute amount to perform linearizion, the following Equation (7) may be obtained.

$$\mathrm{m (x\sim)'' + (c_1 + c_2) (x\sim)' + kx\sim = 0 \cdots (7)}$$

Here, coefficients $c_1$ and $c_2$ of (x~)' of the second term on the left are the following Equations (8) and (9).

$$\mathrm{c_1 = \mu' (V) \cdot W \cdot cos^2\phi \cdots (8)}$$

$$c_2 = (\mu(V) \cdot W / V) \cdot \sin^2\phi \cdots (9)$$

The term $\mu'(V)$ of Equation (8) means the slope of the function $\mu = \mu(Vrel)$ in $Vrel = V$. The coefficient $c_1$ represents a viscosity attenuation which is exhibited according to a relative velocity dependence of the friction coefficient, and the coefficient $c_2$ represents the viscosity attenuation which is exhibited by providing the non-zero misalignment angle $\phi$ (the lateral sliding component $V\sin\phi$).

Since Equation (7) is a second-order linear ordinary differential equation, the stability of the equilibrium point $x_{eq}$ is determined by the sign of the coefficients of $(x\sim)'$. In other words, when the following Expression (10)

$$c_1 + c_2 > 0 \cdots (10)$$

is true, the equilibrium point $x_{eq}$ becomes stable. When Expressions (8) to (10) are organized, the following inequality expression of Expression (11) is finally obtained as the stability condition of the equilibrium point $x_{eq}$.

$$\tan^2\phi > -\mu' (V) \cdot V / \mu (V) \cdots (11)$$

When $\mu'(V) > 0$ is true, Expression (11) is true for a random $\phi$, and when $\mu'(V) < 0$ is true, $c_1 < 0$ (negative attenuation) renders the equilibrium point $x_{eq}$ unstable. However, when the misalignment angle $\phi$ which satisfies the following Equation (12) is given, the effect of $c_2 > 0$ (positive attenuation) exceeds the effect of $c_1 < 0$ and the equilibrium point $x_{eq}$ becomes stable.

$$\phi > \phi\text{c} = \tan^{-1} (-\mu' (V) \cdot V / \mu (V))^{-1/2} \cdots (12)$$

At this time, the friction vibration is not generated in the vicinity of the equilibrium point $x_{eq}$ and the friction force $F\cos\theta$ and the restoring force $kx$ are balanced during the smooth sliding. In other words, when the misalignment angle $\phi$ is set in a range which is indicated by the inequality expression $\phi\text{c} < \phi \leq 90°$, the friction vibration is suppressed as much as possible and is no longer generated.

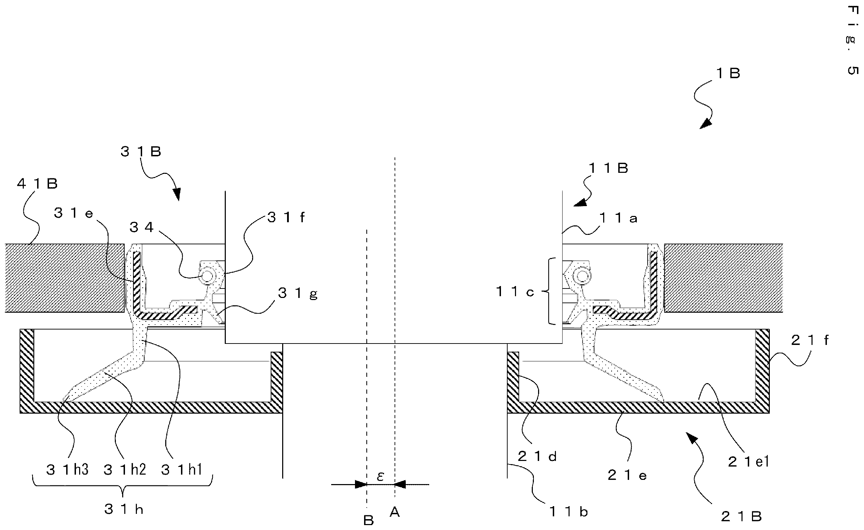

Fig. 5 is a sectional diagram of a sealing device 1B according to the second embodiment of the present invention. The sealing device 1B is configured to include a rotating shaft 11B which rotates centered on the axial center A, a slinger 21B which is a rotating member which is fixed to the rotating shaft 11B and rotates together with the rotating shaft 11B, and a fixing member 31B which rotates relative to the rotating shaft 11B. The rotating shaft 11B is formed from a large diameter portion 11a which has a large diameter and a small diameter portion 11b which has a smaller diameter than the diameter of the large diameter portion 11a, and the rotating shaft 11B includes a sealing portion 11c which is axially sealed by an oil seal on an end portion of the large diameter portion 11a. In the fixing member 31B, an outer circumference of the sealing portion 11c is fitted into a housing 41B to fix the fixing member 31B to the housing 41B.

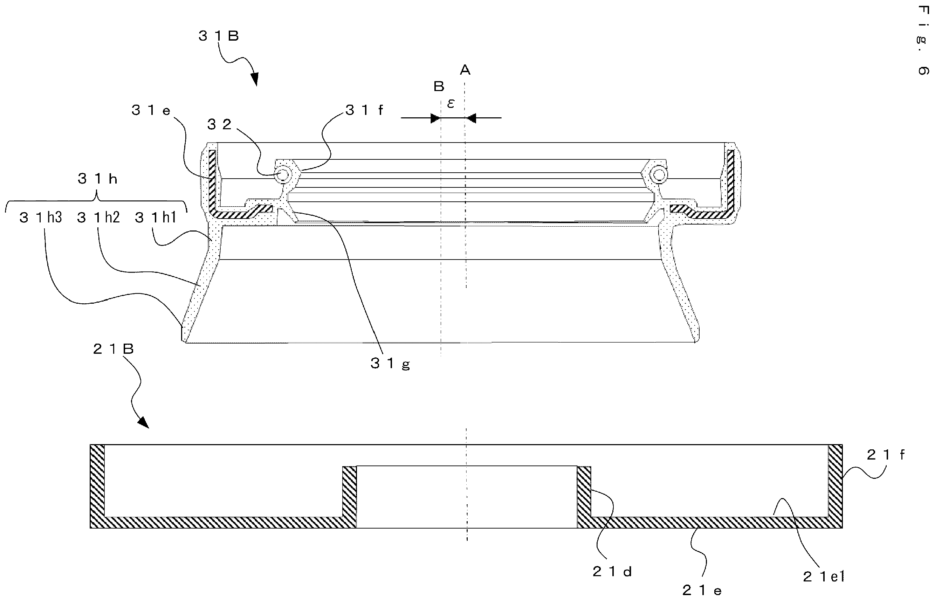

Fig. 6 is a sectional diagram distinctly illustrating each of the slinger 21B and the fixing member 31B in which the sealing device 1B illustrated in Fig. 5 is removed from the housing 41B and the rotating shaft 11B is taken out.

The slinger 21B is produced by punching and press-forming a metal plate and includes an inner diameter cylinder portion 21d which is pressure fitted to the outer circumferential surface of the rotating shaft 11B, a flange portion 21e which extends in a disc shape in an outward radial direction from the inner diameter cylinder portion 21d, and an outer diameter cylinder portion 21f which rises from the outer circumferential edge portion of the flange portion 21e parallel to the inner diameter cylinder portion 21d. The slinger 21B is fixed to the small diameter portion 11b of the rotating shaft 11B in the vicinity of the sealing portion 11c. The flange portion 21e includes, as a rotating surface, a flange surface 21e1 which projects in a direction orthogonally intersecting the axial center A of the rotating shaft 11B to surround the outer circumference of the rotating shaft 11B.

The oil seal which forms the sealing portion 11c of the fixing member 31B is obtained by integrally molding a rubber elastic material as a lip portion on a metal ring 31e which is produced by punching and press-forming a metal plate. A shaft lip portion 31f and a shaft dust lip portion 31g, the distal end portions of which contact the large diameter portion 11a of the rotating shaft 11B, and an end surface lip portion 31h, the distal end portion of which contacts the flange surface 21e1, are formed in the lip portion. The lip portion is supported by the metal ring 31e. A metal spring 34 is provided to cover the outer circumference of the shaft lip portion 31f and the shaft lip portion 31f is pushed against the outer circumference of the large diameter portion 11a by the metal spring 34.

The end surface lip portion 31h includes a tubular portion 31h1 which surrounds the outer circumferential edge portion of the end portion of the large diameter portion 11a, and a skirt portion 31h2, the diameter of which spreads from the tubular portion 31h1 toward the flange surface 21e1. The end surface lip portion 31h exhibits an elastic force for pushing the distal end portions of the end surface lip portion 31h against the flange surface 21e1, and the distal end portion receives a biasing force in an axial direction of the rotating shaft 11B to flex as illustrated in Fig. 5.

In the fixing member 31B, the distal end portion of the end surface lip portion 31h receives the biasing force in the axial direction of the rotating shaft 11B and contacts the flange surface 21e1 as a contacting target portion 31h3. The contacting target portion 31h3 surrounds the outer circumference of the rotating shaft 11B to face the flange surface 21e1 and is provided in a non-rotating state due to the fixing member 31B being supported by the housing 41B. The contacting target portion 31h3 slides on the flange surface 21e1 due to the rotating shaft 11B rotating and the contacting target portion 31h3 rotates relative to the flange surface 21e1. Together with the sealing portion 11c, the sealing device 1B suppresses the leakage of a sealing target or the entrance of foreign matter via the shaft circumference of the rotating shaft 11B due to the contacting target portion 31h3 of the end surface lip portion 31h being pushed against the flange surface 21e1 to contact and slide on the flange surface 21e1. The sealing device 1B is used as a drive unit seal which is used in an output shaft of a differential gear, for example.

In the present embodiment, although the relative rotational center of the fixing member 31B matches the rotational center A of the rotating shaft 11B, the annular shape of the skirt portion 31h2 of the end surface lip portion 31h is not symmetrical to the relative rotational center of the fixing member 31B and is formed asymmetrically. Therefore, a relative rotational center B of the contacting target portions 31h3 in the end surface lip portion 31h is disposed to be eccentric by an interval of the distance $\varepsilon$ with respect to the rotational center A of the rotating shaft 11B. When the rotating shaft 11B rotates and the slinger 21B rotates together with the rotating shaft 11B, the friction force F is generated between the contacting target portions 31h3 of the grease lip portions 31h and the flange surface 21e1. In the housing 41B which supports the fixing member 31B, torsion is generated by the friction force F and a restoring force which is centered on the relative rotational center B acts on the contacting target portion 31h3 against the torsion. The contacting target portion 31h3 receives a rotational drive force from the flange surface 21e1 of the slinger 21B in the rotational drive direction $\beta$ which is intersected by the misalignment angle $\phi$, which is formed with the restoring direction $\alpha$ of the restoring force, in a predetermined angle range of $0 < |\phi| \leq 90°$ and a rotational drive component $V\sin\phi$ which orthogonally intersects the restoring direction $\alpha$ of the restoring force is applied to the contacting target portion 31h3 from the flange surface 21e1.

According to the sealing device 1B of the present embodiment, due to the relative rotational center B of the contacting target portion 31h3 in the skirt-shaped end surface lip portion 31h being disposed to be eccentric with respect to the rotational center A of the slinger 21B and the rotational drive component $V\sin\phi$ which orthogonally intersects the restoring direction $\alpha$ of the restoring force being applied to the contacting target portion 31h3 of the end surface lip portion 31h from the flange surface 21e1 of the slinger 21B, the restoring direction component $F\cos\theta$ of the friction force F which acts on the contacting target portion 31h3 of the end surface lip portion 31h and the restoring force which is exhibited by the housing 41B are autonomously stabilized to assume an equalized state, and the friction vibration is no longer generated by the friction which is generated between the flange surface 21e1 of the slinger 21B and the contacting target portion 31h3 of the end surface lip portion 31h. Therefore, the stick-slipping which occurs in the skirt-shaped end surface lip portion 31h is eliminated and a similar operational effect to that of the sealing device 1A according to the first embodiment is achieved.

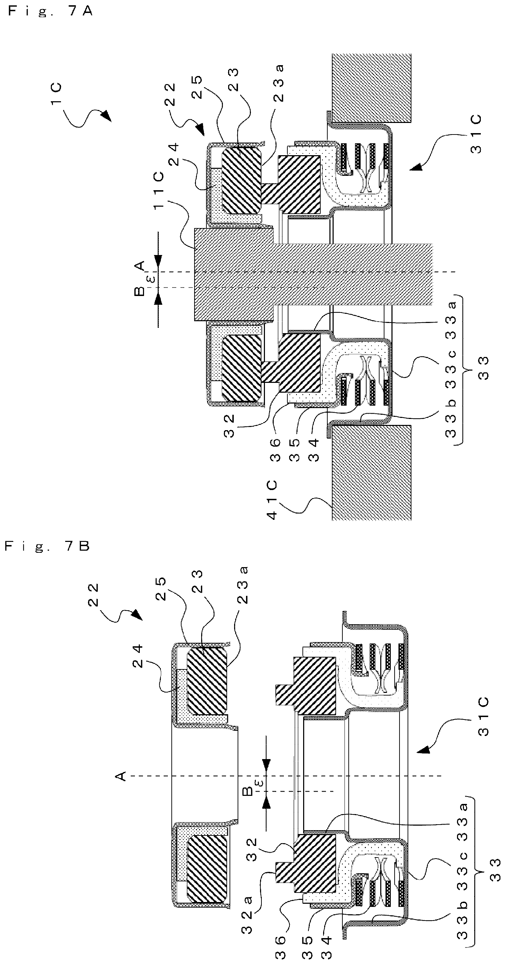

Fig. 7A is a sectional diagram of a sealing device 1C according to the third embodiment of the present invention. The sealing device 1C is provided with a rotating shaft 11C which rotates centered on an axial center A, a rotating ring 23 which configures a rotating member 22 which is fixed to the rotating shaft 11C and rotates together with the rotating shaft 11C, and a fixed ring 32 which configures a fixing member 31C which rotates relative to the rotating shaft 11C. The fixed ring 32 is fitted to the inner circumference of a stepped inner diameter cylinder portion 33a of a case 33 which stores the fixed ring 32 and is fixed to the case 33. In the case 33, an outer circumference of an outer diameter cylinder portion 33b is fitted into a housing 41C to fix the case 33 to the housing 41C. Therefore, the fixed ring 32 is fixed to the housing 41C via the case 33.

Fig. 7B is a sectional diagram distinctly illustrating each of the rotating member 22 and the fixing member 31C in which the sealing device 1C illustrated in Fig. 7A is removed from the housing 41C and the rotating shaft 11C is taken out.

The rotating ring 23 which configures the rotating member 22 has a ring shape with a rectangular parallelopiped-shaped cross section, is formed from ceramics or the like, and is rigid. The rotating ring 23 is stored in a sleeve 25 having a letter U-shaped cross section via a cup gasket 24 having a letter L-shaped cross section. The sleeve 25 is fitted to the outer diameter portion of the rotating shaft 11C to be fixed to the rotating shaft 11C. Therefore, the rotating ring 23 includes a rotating ring-shaped end surface 23a which orthogonally intersects the axial center A of the rotating shaft 11C as the rotating surface and is fixed to the rotating shaft 11C.

The fixed ring 32 which configures the fixing member 31C has a ring shape with a convex cross section, is formed from ceramics or the like, and is rigid. The fixed ring 32 includes a static annular surface 32a facing the rotating ring-shaped end surface 23a as a contacting target portion and the static annular surface 32a contacts and slides on the rotating ring-shaped end surface 23a. A metal spring 34 is held by a spring holder 35 between the fixed ring 32 and an inner circumferential base surface in a base portion 33c of the case 33. The spring holder 35 contacts the fixed ring 32 via an elastic rubber bellow 36. The metal spring 34 configures an elastic body which exhibits an elastic force for pushing the static annular surface 32a of the fixed ring 32 against the rotating ring-shaped end surface 23a of the rotating ring 23.

In the fixed ring 32, the static annular surface 32a receives the biasing force in the axial direction of the rotating shaft 11C and contacts the rotating ring-shaped end surface 23a as the contacting target portion. The static annular surface 32a surrounds the outer circumference of the rotating shaft 11C to face the rotating ring-shaped end surface 23a and is provided in a non-rotating state due to the fixed ring 32 being supported by the housing 41C. The static annular surface 32a slides on the rotating ring-shaped end surface 23a due to the rotating shaft 11C rotating and rotates relative to the rotating ring-shaped end surface 23a. The sealing device 1C suppresses the leakage of a sealing target or the entrance of foreign matter via the shaft circumference of the rotating shaft 11C due to the static annular surface 32a being pushed against the rotating ring-shaped end surface 23a to contact and slide on the rotating ring-shaped end surface 23a. The sealing device 1C is used as a mechanical seal.

In the present embodiment, although the relative rotational center of the fixing member 31C matches the rotational center A of the rotating shaft 11C, the annular center of the static annular surface 32a in the fixed ring 32 is eccentric from the relative rotational center of the fixing member 31C. In other words, the relative rotational center B of the static annular surface 32a is disposed to be eccentric by an interval of the distance $\varepsilon$ with respect to the rotational center A of the rotating shaft 11C. When the rotating shaft 11C rotates and the rotating ring 23 rotates together with the rotating shaft 11C, the friction force F is generated between the static annular surface 32a and the rotating ring-shaped end surface 23a. In the housing 41C which supports the fixing member 31C, torsion is generated by the friction force F and a restoring force which is centered on the relative rotational center B acts on the static annular surface 32a of the fixed ring 32 against the torsion. The static annular surface 32a of the fixed ring 32 receives a rotational drive force from the rotating ring-shaped end surface 23a of the rotating ring 23 in the rotational drive direction $\beta$ which is intersected by the misalignment angle $\phi$, which is formed with the restoring direction $\alpha$ of the restoring force, in a predetermined angle range of $0 < |\phi| \le 90°$ and a rotational drive component $V\sin\phi$ which orthogonally intersects the restoring direction $\alpha$ of the restoring force is applied to the static annular surface 32a from the rotating ring-shaped end surface 23a.

According to the sealing device 1C of the present embodiment, due to the relative rotational center B of the static annular surface 32a of the fixed ring 32 being disposed to be eccentric with respect to the rotational center A of the rotating ring 23 and the rotational drive component $V\sin\phi$ which orthogonally intersects the restoring direction $\alpha$ of the restoring force being applied to the static annular surface 32a of the fixed ring 32 from the rotating ring-shaped end surface 23a of the rotating ring 23, the restoring direction component $F\cos\theta$ of the friction force F which acts on the static annular surface 32a of the fixed ring 32 and the restoring force which is exhibited by the housing 41C are autonomously stabilized to assume an equalized state, and the friction vibration is no longer generated by the friction which is generated between the rotating ring-shaped end surface 23a of the rotating ring 23 and the static annular surface 32a of the fixed ring 32. Therefore, the stick-slipping which occurs between the rotating ring-shaped end surface 23a and the static annular surface 32a is eliminated and a similar operational effect to that of the sealing device 1A according to the first embodiment is achieved.

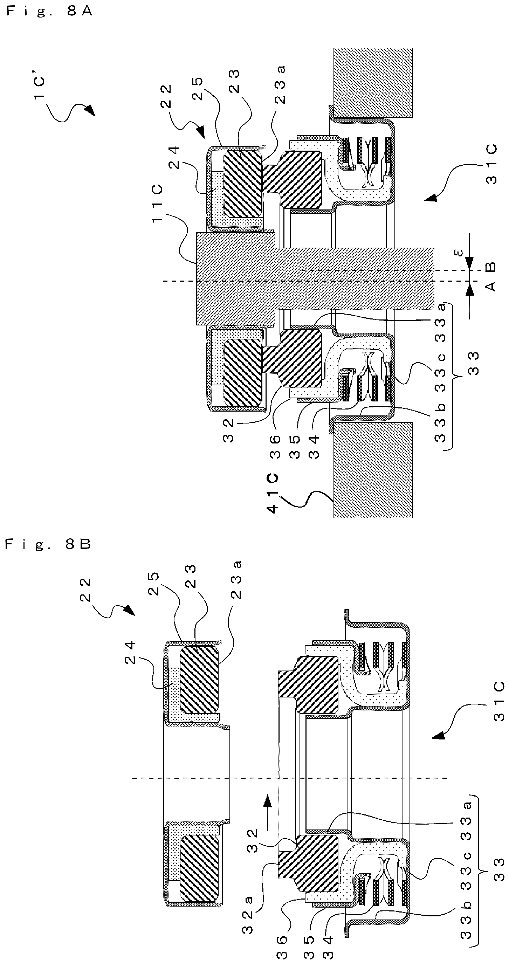

In the third embodiment, a description is given of a case in which the annular center of the static annular surface 32a in the fixed ring 32 is disposed to be eccentric from the relative rotational center of the fixing member 31C and the relative rotational center B of the static annular surface 32a is disposed to be eccentric with respect to the rotational center A of the rotating shaft 11C by an interval of the distance $\varepsilon$. However, the relative rotational center B of the static annular surface 32a and the rotational center A of the rotating ring 23 may be eccentric by the distance $\varepsilon$ by causing the annular center of the static annular surface 32a to match the rotational center of the fixing member 31C as illustrated in Fig. 8B and causing the inner diameter center of the housing 41C to be eccentric from the rotational center A of the rotating shaft 11C as illustrated in Fig. 8A without causing the annular center of the static annular surface 32a to be eccentric from the relative rotational center of the fixing member 31C. Fig. 8A is a sectional diagram of the sealing device 1C' according to a modification example of the sealing device 1C according to the third embodiment and Fig. 8B is a sectional diagram distinctly illustrating each of the rotating member 22 and the fixing member 31C in which the sealing device 1C' according to the modification example is removed from the housing 41C and the rotating shaft 11C is taken out. In Fig. 8, portions which are the same as or correspond to those in Fig. 7 will be given the same symbols and the description thereof will be omitted.

Even in the sealing device 1C' according to the modification example, due to the rotational drive component $V\sin\phi$ which orthogonally intersects the restoring direction $\alpha$ of the restoring force being applied to the static annular surface 32a of the fixed ring 32 from the rotating ring-shaped end surface 23a of the rotating ring 23, the restoring direction component $F\cos\theta$ of the friction force F which acts on the static annular surface 32a of the fixed ring 32 and the restoring force which is exhibited by the housing 41C are autonomously stabilized to assume an equalized state, and the stick-slipping which occurs between the rotating ring-shaped end surface 23a and the static annular surface 32a is eliminated and a similar operational effect to that of the sealing device 1C according to the third embodiment is achieved.

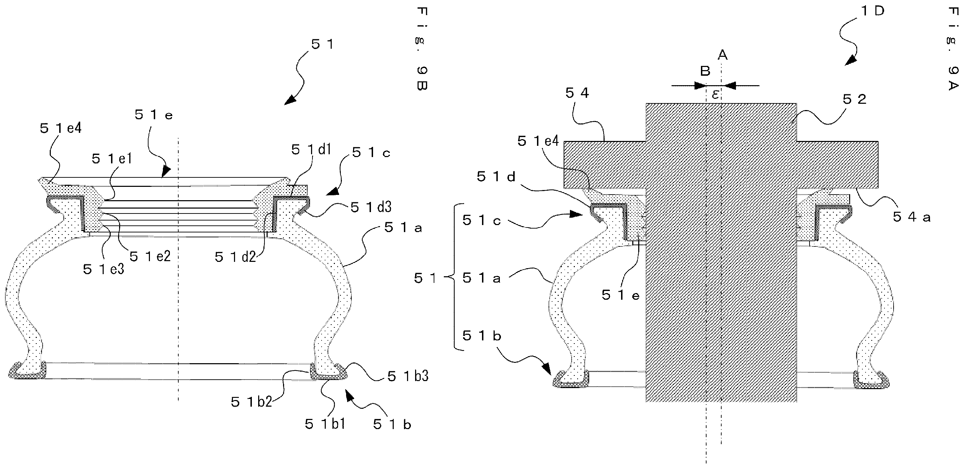

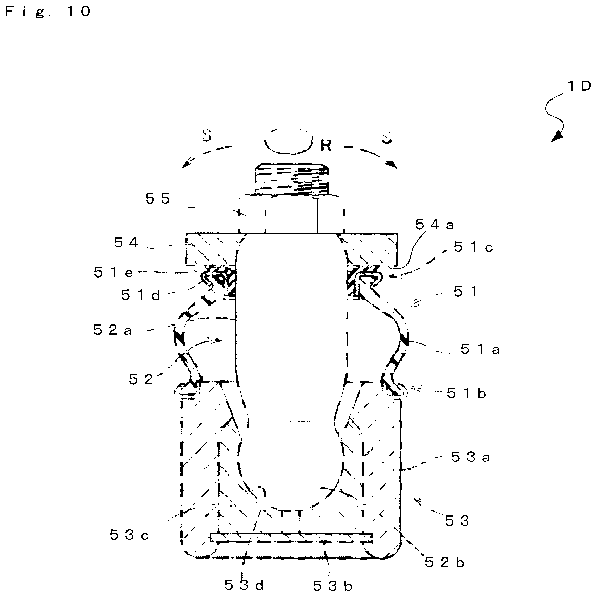

Fig. 9A is a sectional diagram of the main parts of a sealing device 1D according to the fourth embodiment of the present invention, and a complete image is illustrated in Fig. 10.

The sealing device 1D suppresses the leakage of the sealing target from a ball joint portion or the entrance of foreign matter to the ball joint portion. The sealing device 1D is provided with a dust cover 51 illustrated in Fig. 9B.

As illustrated in Fig. 10, a ball joint is provided with a ball stud 52 which includes a spherical portion 52b on one end of a shaft portion 52a, a socket 53 which supports the ball stud 52 to rotate and rock freely, and a knuckle 54 which serves as an attaching target portion of the ball stud 52 which is fixed to the shaft portion 52a on the opposite side from the spherical portion 52b. The socket 53 is provided with an annular case 53a, a base plate 53b which is fixed to the base side of the case 53a, and a bearing 53c of the spherical portion 52b. The bearing 53c includes a bearing surface 53d which is configured by a spherical surface having the same radius of curvature as that of the spherical portion 52b. The knuckle 54 is fixed to the shaft portion 52a by a nut 55.

The dust cover 51 includes a trunk portion 51a, a fixing target portion 51b, and a seal portion 51c. The trunk portion 51a which has deformable elasticity and is formed from a film which has a bowl shape. The fixing target portion 51b is provided on one end side of the trunk portion 51a and is fixed to the socket 53 which supports the ball stud 52 to rotate and rock freely. The seal portion 51c is provided on the other end side of the trunk portion 51a and is provided to slide freely with respect to each of the shaft portion 52a of the ball stud 52 and the knuckle 54. Accordingly, the ball stud 52 rocks with respect to the socket 53 in a direction indicated by an arrow S and rotates with respect to the socket 53 in a direction indicated by an arrow R.

As illustrated in Fig. 9B, the fixing target portion 51b is a metal member which is configured by a toric plate-shaped portion 51b1, a first cylindrical portion 51b2 which is provided on the inner circumferential surface side of the plate-shaped portion 51b1, and a second cylindrical portion 51b3 which is provided on the outer circumferential surface side of the plate-shaped portion 51b1. The fixing target portion 51b is fixed to one end of the trunk portion 51a by the second cylindrical portion 51b3 being swaged in a state in which one end of the trunk portion 51a is fitted into the fixing target portion 51b. As illustrated in Fig. 10, the fixing target portion 51b is fixed to the end portion of the case 53a of the socket 53 by fitting.

The seal portion 51c is configured of a metal reinforcing ring 51d and a rubber-form elastic body seal main body 51e which is provided integrally with the reinforcing ring 51d. The reinforcing ring 51d is configured of a toric plate-shaped portion 51d1, a first cylindrical portion 51d2 which is provided on the inner circumferential surface side of the plate-shaped portion 51d1, and a second cylindrical portion 51d3 which is provided on the outer circumferential surface side of the plate-shaped portion 51d1. The reinforcing ring 51d is fixed to the other end of the trunk portion 51a by the second cylindrical portion 51d3 being swaged in a state in which the other end of the trunk portion 51a is fitted into the reinforcing ring 51d. The seal main body 51e is provided with an inner circumferential seal portion which is configured by a first annular convex portion 51e1, a second annular convex portion 51e2, and a third annular convex portion 51e3, and a dust seal portion which is configured by a dust lip 51e4.

The ball stud 52 configures a rotating shaft which rotates centered on the axial center A of the shaft portion 52a. The knuckle 54 configures the rotating member which includes an attaching target surface 54a as a rotating surface. The elastic seal main body 51e configures a fixing member and is provided with the dust lip 51e4, which contacts the attaching target surface 54a, as a contacting target portion. The trunk portion 51a exhibits the elastic force of the trunk portion 51a as a biasing force to push the dust lip 51e4 against the attaching target surface 54a in the axial direction of the ball stud 52. The sealing device 1D suppresses the leakage of the sealing target from the ball joint portion or the entrance of foreign matter to the ball joint portion via the shaft portion 52a of the ball stud 52 in the seal portion 51c due to the dust lip 51e4 receiving the elastic force which is exhibited by the trunk portion 51a to be pushed against and contact the attaching target surface 54a and due to the dust lip 51e4 sliding on the attaching target surface 54a when the ball stud 52 rotates.

In the present embodiment, although the relative rotational center of the dust cover 51 matches the rotational center A of the knuckle 54, the relative rotational center B of the dust lip 51e4 is eccentric from the rotational center A of the knuckle 54. Therefore, the relative rotational center B of the dust lip 51e4 is disposed to be eccentric with respect to the rotational center A of the knuckle 54 by an interval of the distance $\varepsilon$. When the ball stud 52 rotates and the knuckle 54 rotates together with the ball stud 52, the friction force F is generated between the dust lip 51e4 and the attaching target surface 54a of the knuckle 54. In the trunk portion 51a which supports the dust lip 51e4, torsion is generated by the friction force F and a restoring force which is centered on the relative rotational center B acts on the dust lip 51e4 against the torsion. The dust lip 51e4 receives a rotational drive force from the attaching target surface 54a of the knuckle 54 in the rotational drive direction $\beta$ which is intersected by the misalignment angle $\phi$, which is formed with the restoring direction $\alpha$ of the restoring force, in a predetermined angle range of $0 < |\phi| \leq 90°$ and a rotational drive component $V\sin\phi$ which orthogonally intersects the restoring direction $\alpha$ of the restoring force is applied to the dust lip 51e4 from the attaching target surface 54a.

According to the sealing device 1D of the present embodiment, due to the relative rotational center B of the dust lip 51e4 being disposed to be eccentric with respect to the rotational center A of the attaching target surface 54a and the rotational drive component Vsin $\phi$ which orthogonally intersects the restoring direction $\alpha$ of the restoring force being applied to the dust lip 51e4 from the attaching target surface 54a of the knuckle 54, the restoring direction component Fcos$\theta$ of the friction force F which acts on the dust lip 51e4 and the restoring force which is exhibited by the trunk portion 51a are autonomously stabilized to assume an equalized state, and the friction vibration is no longer generated by the friction which is generated between the attaching target surface 54a of the knuckle 54 and the dust lip 51e4. Therefore, the stick-slipping which occurs in the seal portion 51c of the dust cover 51 is eliminated and a similar operational effect to that of the sealing device 1A according to the first embodiment is achieved.

In the sealing devices 1A, 1B, 1C, 1C', and 1D according to the embodiments and the modification example, the eccentricity distance $\varepsilon$ of the relative rotational center B to the rotational center A may be set to 10% to 40%, preferably to 20% to 30% of the diameter of the contacting target portions 31b1 and 31h3, the static annular surface 32a, and the dust lip 51e4 which rotate relatively.

Industrial Applicability

It is favorable to use the sealing device according to the present invention for suppressing leakage of a sealing target or the entrance of foreign matter via a shaft circumference of various rotating shafts in delivery machinery, construction machinery, agricultural machinery, or the like.

Reference Signs List

1A, 1B, 1C, 1C', 1D ··· sealing device
11A, 11B, 11C ··· rotating shaft
11c ··· sealing portion of rotating shaft 11B
21A, 21B ··· slinger (rotating member)
21b1, 21e1 ··· flange surface (rotating surface)
22 ··· rotating member
23 ··· rotating ring
23a ··· rotating ring-shaped end surface (rotating surface) of rotating ring 23
31A, 31B, 31C ··· fixing member
31a ··· metal ring
31b ··· grease lip portion
31b1 ··· contacting target portion of grease lip portion 31b
31h ··· end surface lip portion
31h3 ··· contacting target portion of end surface lip portion 31h
32 ··· fixed ring
32a ··· static annular surface (contacting target portion) of fixed ring 32
34 ··· metal spring (elastic body)
41A, 41B, 41C ··· housing
51 ··· dust cover
51a ··· trunk portion
51b ··· fixing target portion
51c ··· seal portion
51e ··· seal main body (fixing member)
51e4 ··· dust lip (contacting target portion)
52 ··· ball stud (rotating shaft)
52a ··· shaft portion
52b ··· spherical portion
53 ··· socket
54 ··· knuckle (attaching target portion: rotating member)
54a ··· attaching target surface
A ··· rotational center
B ··· relative rotational center
$\alpha$ ··· restoring direction of restoring force
$\beta$ ··· rotational drive direction
$\phi$ ··· misalignment angle formed by restoring direction $\alpha$ and rotational drive direction $\beta$

**Claims**

1. A sealing device (1A, 1B, 1C, 1C', 1D) comprising:

a rotating shaft (11A, 11B, 11C, 52) which rotates centered on an axial center;
a rotating member (21A, 21B, 22, 54) which includes a rotating surface (21b1, 21e1, 23a, 54a) which projects in a direction which orthogonally intersects the axial center and surrounds an outer circumference of the rotating shaft (11A, 11B, 11C, 52), and rotates together with the rotating shaft (11A, 11B, 11C, 52); and
a fixing member (31A, 31B, 31C, 51e) which includes a contacting target portion (31b1, 31h3, 32a, 51e4) which is provided in a non-rotating state to surround an outer circumference of the rotating shaft (11A, 11B, 11C, 52) and face the rotating surface (21b1, 21e1, 23a, 54a), receives a biasing force in an axial direction of the rotating shaft (11A, 11B, 11C, 52) to contact the rotating surface (21b1, 21e1, 23a, 54a), slides on the rotating surface (21b1, 21e1, 23a, 54a) due to the rotating shaft (11A, 11B, 11C, 52) rotating, and rotates relative to the rotating shaft (11A, 11B, 11C, 52),
wherein the sealing device (1A, 1B, 1C, 1C', 1D) suppresses leakage of a sealing target or entrance of foreign matter via a shaft circumference of the rotating shaft (11A, 11B, 11C, 52) due to the contacting target portion (31b1, 31h3, 32a, 51e4) being pushed against the rotating surface (21b1, 21e1, 23a, 54a) and contacting and sliding on the rotating surface (21b1, 21e1, 23a, 54a),
**characterized in that** in the fixing member (31A, 31B, 31C, 51e), a relative rotational center of the contacting target portion (31b1, 31h3, 32a, 51e4) is disposed to be eccentric with respect to a rotational center of the rotating shaft (11A, 11B, 11C, 52), the contacting target portion (31b1, 31h3, 32a, 51e4) receives a rotational drive force from the rotating shaft (11A, 11B, 11C, 52) in a direction which intersects, in a predetermined angle range, a restoring direction of a restoring force which is exhibited around the relative rotational center against torsion which is generated by a friction force which is generated between the contacting target portion (31b1, 31h3, 32a, 51e4) and the rotating surface (21b1, 21e1, 23a, 54a), and a rotational drive component which orthogonally intersects the restoring direction of the restoring force is applied to the contacting target portion (31b1, 31h3, 32a, 51e4) from the rotating surface (21b1, 21e1, 23a, 54a) .

2. The sealing device (1A) according to Claim 1,
wherein the rotating member is a slinger (21A) which includes a flange surface (21b1) as the rotating surface and is fixed to the rotating shaft (11A),
wherein the fixing member (31A) includes a lip portion (31b), a distal end portion of which contacts and slides on the flange surface (21b1) as the contacting target portion (31b1), which exhibits, as the biasing force, an elastic force for pushing the distal end portion against the flange surface (21b1), and a metal ring (31a) which supports the lip portion (31b), and
wherein the sealing device (1A) is configured from an oil seal which suppresses leakage of a sealing target or entrance of foreign matter via a shaft circumference of the rotating shaft (11A) due to the distal end portion of the lip portion (31b) being pushed against the flange surface (21b1) to contact and slide on the flange surface (21b1).

3. The sealing device (1B) according to Claim 1,
wherein the rotating shaft (11B) includes a sealing portion (11c) which is axially sealed,
wherein the rotating member is a slinger (21B) which includes a flange surface (21e1) as the rotating surface and is fixed to the rotating shaft (11B) in a vicinity of the sealing portion (11c),
wherein the fixing member (31B) includes a lip portion (31h) which has a skirt-shape in which a diameter spreads from the sealing portion (11c) toward the flange surface (21e1), a distal end portion of the lip portion (31h) contacts and slides on the flange surface (21e1) as the contacting target portion (31h3), and exhibits, as the biasing force, an elastic force for pushing the distal end portion against the flange surface (21e1), and
wherein the sealing device (1B) suppresses, together with the sealing portion (11c), leakage of a sealing target or entrance of foreign matter via a shaft circumference of the rotating shaft (11B) due to the distal end portion of the lip portion (31h) being pushed against the flange surface (21e1) to contact and slide on the flange surface (21e1).

4. The sealing device (1C, 1C') according to Claim 1,
wherein the rotating member (22) includes a rotating ring (23) which includes a rotating ring-shaped end surface (23a) which orthogonally intersects an axial center of the rotating shaft (11C) as the rotating surface, is fixed to the rotating shaft (11C), and is rigid,
wherein the fixing member (31C) includes a static annular surface (32a) which faces the rotating ring-shaped end surface (23a) as the contacting target portion, includes a fixed ring (32) in which the static annular surface (32a) contacts and slides on the rotating ring-shaped end surface (23a), and is rigid,

wherein the sealing device (1C, 1C') further comprises an elastic body (34) which exhibits, as the biasing force, an elastic force for pushing the static annular surface (32a) of the fixed ring (32) against the rotating ring-shaped end surface (23a) of the rotating ring (23), and

wherein the sealing device (1C, 1C') is configured from a mechanical seal which suppresses leakage of a sealing target or entrance of foreign matter via a shaft circumference of the rotating shaft (11C) due to the static annular surface (32a) of the fixed ring (32) being pushed against the rotating ring-shaped end surface (23a) of the rotating ring (23) to contact and slide on the rotating ring-shaped end surface (23a).

5. The sealing device (1D) according to Claim 1, further comprising:

a dust cover (51) which includes a trunk portion (51a) which has deformable elasticity, a fixing target portion (51b) which is provided to one end side of the trunk portion (51a) and is fixed to a socket (53) which supports a ball stud (52) to rotate and rock freely, and a seal portion (51c) which is provided on another end side of the trunk portion (51a) to slide freely with respect to each of a shaft portion (52a) of the ball stud (52) having a spherical portion (52b) on one end and an attaching target portion (54) of the ball stud (52),

wherein the rotating shaft is the ball stud (52),

wherein the rotating member is the attaching target portion (54) which includes an attaching target surface (54a) as the rotating surface and is fixed to the shaft portion (52a) of the ball stud (52),

wherein the fixing member is an elastic seal main body (51e) which is provided with a dust lip (51e4) which contacts the attaching target surface (54a) as the contacting target portion and is provided on the seal portion (51c), and

wherein the sealing device (1D) suppresses leakage of a sealing target from a ball joint portion or entrance of foreign matter to the ball joint portion via a shaft circumference of the ball stud (52) due to the dust lip (51e4) receiving an elastic force which is exhibited by the trunk portion (51a) as the biasing force, being pushed against the attaching target surface (54a) to contact the attaching target surface (54a), and the dust lip (51e4) sliding on the attaching target surface (54a) when the ball stud (52) rotates.

6. The sealing device (1A, 1B, 1C, 1C', 1D) according to any one of Claim 1 to Claim 5,
wherein the predetermined angle range is a range indicated by an inequality expression $0 < |\phi| \le 90°$ when an absolute value of an angle $\phi$ which is formed by a rotational drive direction of the rotating shaft (11A, 11B, 11C, 52) with a restoring direction of the restoring force is set to $|\phi|$.

Fig. 1

Fig. 2

Fig. 3

Fig. 4A

Fig. 4B

Fig. 5

Ｆｉｇ．６

Fig. 7A

Fig. 7B

Fig. 8A

Fig. 8B

Fig. 9A

Fig. 9B

...

Fig. 10

**INTERNATIONAL SEARCH REPORT**

| International application No. |
|---|
| PCT/JP2018/027190 |

A.  CLASSIFICATION OF SUBJECT MATTER
Int.Cl.  F16J15/3204(2016.01)i,          F16C11/06(2006.01)i,
        F16J15/3252(2016.01)i, F16J15/34(2006.01)i

According to International Patent Classification (IPC) or to both national classification and IPC

B.  FIELDS SEARCHED

Minimum documentation searched (classification system followed by classification symbols)
Int.Cl.  F16J15/3204, F16C11/06, F16J15/3252, F16J15/34

Documentation searched other than minimum documentation to the extent that such documents are included in the fields searched
Published examined utility model applications of Japan          1922-1996
Published unexamined utility model applications of Japan          1971-2018
Registered utility model specifications of Japan          1996-2018
Published registered utility model applications of Japan          1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2005-264748 A (DAIKIN INDUSTRIES, LTD.) 29 September 2005, fig. 3-5 & US 2008/0274001 A1, fig. 3-5 & WO 2005/088079 A1 & EP 1726779 A1 & KR 10-2006-0127258 A & CN 1934335 A | 1-6 |
| A | JP 2014-23234 A (DENSO CORP.) 03 February 2014, paragraphs [0047]-[0049] (Family: none) | 1-6 |

☒  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 August 2018 (23.08.2018) | 04 September 2018 (04.09.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/027190 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2014/203609 A1 (KOYO SEALING TECHNO CO., LTD.) 24 December 2014, paragraphs [0032]-[0035], fig. 2 & US 2016/0153564 A1, paragraphs [0057]-[0060], fig. 2 & CN 105308371 A & KR 10-2016-0022896 A | 1-6 |
| A | Microfilm of the specification and drawings annexed to the request of Japanese Utility Model Application No. 125441/1989 (Laid-open No. 67763/1991) (NOK CORPORATION) 02 July 1991, page 16, lines 10-18, fig. 2-4 (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012057729 A